# EUROPEAN PATENT SPECIFICATION

(11) **EP 4 638 987 B1**
(45) Date of publication and mention of the grant of the patent: **18.11.2026**
(21) Application number: 23837788.1
(22) Date of filing: 20.12.2023
(51) Int. Cl.: F16H 7/08

(54) **TENSIONER FOR AN ACCESSORY DRIVE OF A MOTOR VEHICLE AND ACCESSORY DRIVE INCLUDING SUCH A TENSIONER**
SPANNVORRICHTUNG FÜR EINEN HILFSANTRIEB EINES KRAFTFAHRZEUGS UND HILFSANTRIEB MIT SOLCH EINER SPANNVORRICHTUNG
TENDEUR POUR UN ENTRAÎNEMENT D'ACCESSOIRE DE VÉHICULE À MOTEUR ET ENTRAÎNEMENT D'ACCESSOIRE COMPRENANT UN TEL TENDEUR

(30) Priority: 23.12.2022 IT 202200026778
(43) Date of publication of application: 29.10.2025
(73) Proprietor: Muviq S.r.l., 10015 Ivrea (TO) (IT)
(72) Inventor: PENNAZZA, Mario, 66100 CHIETI (IT); RAMIN, Ettore, 10015 IVREA (TO) (IT); DE BLASIO, Gianmario, 10015 IVREA (TO) (IT); CIPOLLONE, Franco, 66100 CHIETI (IT)
(74) Representative: Studio Torta S.p.A.
(86) International application number: PCT/IB2023/063038
(87) International publication number: WO 2024/134549

(56) References cited:
- WO-A1-2004/059192
- WO-A1-2022/003624
- DE-B3- 102016 213 748
- US-A1- 2003 109 342

## Description

### Technical Field

The present invention relates to a tensioner for an accessory drive of a motor vehicle and to an accessory drive including such a tensioner.

### Background Art

An example of a tensioner comprising the features of the preamble of claim 1 is disclosed in US2003109342A1.

As is known, an accessory drive of a prime mover, for example an internal combustion engine, comprises a first pulley connected to a drive shaft of the engine, a second pulley connected to a shaft of an electrical machine, and may comprise one or more pulleys for driving other accessories, for example the compressor of the conditioning system. The accessory drive further comprises a belt for transmitting motion between the aforementioned pulleys and a tensioner configured to ensure a correct minimum tension level of the belt and preventing slippage between the belt and the pulleys.

In conventional accessory drives, wherein the electrical machine is an alternator (electrical generator) driven by the engine, the tensioner acts on the slack span of the belt, i.e. the span positioned downstream of the engine and upstream of the alternator with reference to the motion direction of the belt.

In motor vehicles, instead of the conventional alternator, a reversible electrical machine is increasingly being used which can operate, besides in the conventional generator mode, according to further modes, for example as regenerative brake (the so-called "recovery" condition), or as supplementary motor acting in combination with the prime mover (the so-called "boost" condition).

The use of a reversible electrical machine entails that the span of the belt which is taut in the operating conditions wherein the electrical machine is driven by the engine becomes the slack span when the drive torque is supplied by the electrical machine.

Therefore, various solutions have been developed which allow to ensure the correct tensioning of both spans of the belt.

For example, a solution consists in using a two-arm tensioner carrying respective tensioning pulleys.

In particular, according to a known solution, the tensioner comprises a base configured to be fixed to a fixed support structure; a first arm rotatable with respect to the base about a first axis; a second arm rotatable about a second axis; a first tensioning pulley carried by the first arm and rotatable with respect to it about its own axis; a second tensioning pulley carried by the second arm and rotatable with respect to it about its own axis; elastic means acting on the first arm and on the second arm for pushing the first tensioning pulley and the second tensioning pulley into contact with respective spans of the belt.

The first arm and the second arm define an angle with respect to one another having a magnitude of which it is desirable to limit a maximum value. However, the limitation of such maximum value may give rise to contrasting requirements. In particular, a maximum value which is acceptable when the tensioner is in use may not be acceptable, because too small, when the first arm and the second arm must be sufficiently angularly spaced apart from one another to allow the installation of the belt.

A purpose of the present invention is to manufacture a tensioner for an accessory drive, which allows the above problems to be overcome.

### Disclosure of the Invention

The aforementioned purpose is achieved by a tensioner for an accessory drive as claimed in claim 1.

The present invention further relates to an accessory drive as claimed in claim 17.

### Brief Description of the Drawings

For a better understanding of the present invention, a preferred embodiment is described hereinafter, by way of non-limiting example and with reference to the accompanying drawings, wherein:
- Figure 1 is a front schematic view of an accessory drive with a tensioner according to a first embodiment of the present invention;
- Figure 2 is an exploded perspective view of the tensioner of Figure 1;
- Figure 3 is a front view of the tensioner of Figure 1;
- Figure 4 is a front schematic view of a detail of a tensioner according to a second embodiment of the present invention;
- Figure 5 is a front schematic view of a detail of a tensioner according to a third embodiment of the present invention;
- Figure 6 is a front schematic view of a detail of a tensioner according to a fourth embodiment of the present invention; and
- Figure 7 is a front schematic view of a detail of a tensioner according to a fifth embodiment of the present invention.

### Detailed Description of the Invention

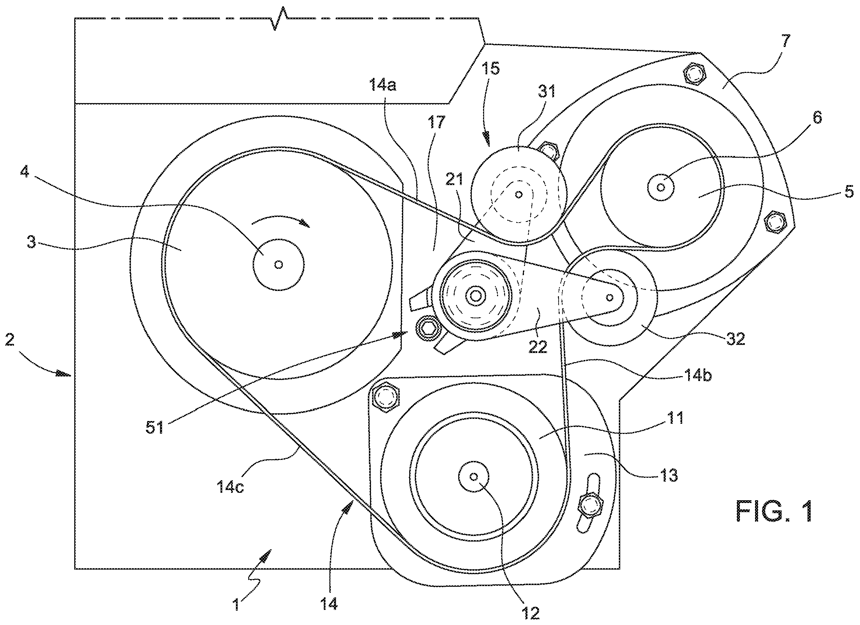

With reference to Figure 1, there is indicated by 1 an accessory drive of a prime mover, for example an internal combustion engine 2.

The accessory drive 1 comprises a first pulley 3 connected to a drive shaft 4 of the engine 2 and a second pulley 5 connected to a shaft 6 of an electrical machine 7. Optionally, the accessory drive comprises other pulleys for driving other accessories of the engine 2, for example a third pulley 11 connected to a shaft 12 of a compressor 13 of the conditioning system.

The accessory drive 1 further comprises a belt 14 which is wound on the pulleys 3, 5, 11 and thus has a first span 14a comprised between the first pulley 3 and the second pulley 5, a second span 14b comprised between the second pulley 5 and the third pulley 11, and a third span 14c comprised between the third pulley 11 and the first pulley 3.

The accessory drive 1 further comprises a tensioner 15 comprising a base 16 configured to be fixed to a fixed support structure 17, a first arm 21 rotatable with respect to the base 16 about a first axis A1, a second arm 22 rotatable about a second axis A2, a first tensioning pulley 31 carried by the first arm 21 and rotatable with respect to it about its own axis PA1, a second tensioning pulley 32 carried by the second arm 22 and rotatable with respect to it about its own axis PA2.

The support structure 17 may be a bracket fixed to the engine 2 in an inner zone of the belt 14, or a portion of the engine 2 in such zone, or a casing of the electrical machine 7.

Preferably, the first axis A1 and the second axis A2 are coincident with one another and define a common axis A of rotation of the two arms 21, 22. Therefore, the first arm 21 and the second arm 22 are rotatable with respect to the base 16 about the common axis A. In particular, the first arm 21 and the second arm 22 are hinged to the base 16 about the common axis A.

The pulleys 31, 32 are configured to cooperate, respectively, with the spans 14a, 14b of the belt 14 arranged, respectively, upstream and downstream of the second pulley 5 according to the advancement direction of the belt 14 (clockwise, with reference to Figure 1).

In particular, the tensioner 15 comprises elastic means 41 acting on the first arm 21 and on the second arm 22 for pushing the first pulley 31 and the second pulley 32 into contact with the respective spans 14a, 14b of the belt 14.

Conveniently, the elastic means 41 comprise a spiral torsion spring 42, the arms 21, 22 are loaded towards one another by the spring 42, and the pulleys 31, 32 are configured to cooperate with respective external surfaces of the respective spans 14a, 14b of the belt 14.

The tensioner 15 further comprises stop means 51 configured to limit an angular distance between the first arm 21 and the second arm 22.

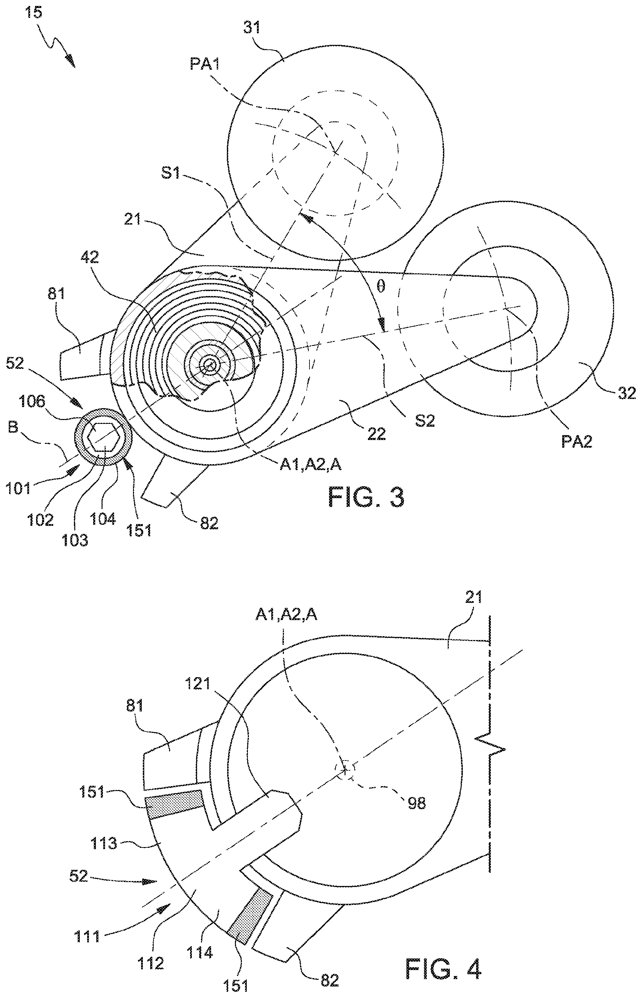

In particular, such angular distance (Figure 3) corresponds to a convex angle θ defined by two half-lines S1, S2 which have common origin on the axis A, are orthogonal to the axis A and pass through PA1 and PA2, respectively.

The stop means 51 comprise at least one removable stop element 52, described in detail hereinafter, so as to define a first maximum angular distance between the two arms 21, 22 in an installation configuration of the belt 14 wherein the removable stop element 52 is absent, and a second maximum angular distance, less than the first maximum angular distance, in an operating configuration of the accessory drive 1 wherein the removable stop element 52 is present.

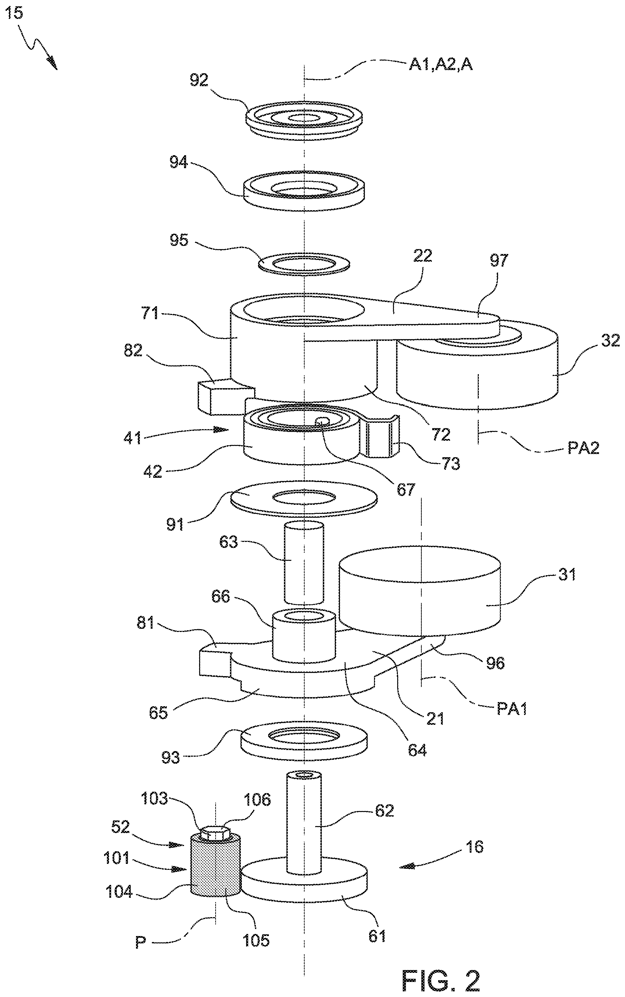

The base 16 (Figure 2) comprises a base plate 61, preferably shaped as a disk of axis A, and a tubular axial pivot 62 of axis A fixed to the plate 61.

The first arm 21 and the second arm 22 are hinged to the pivot 62 with the interposition of an antifriction radial bushing 63.

The first arm 21 is provided with a hub 64 having a substantially circular end, which has on a face thereof a projected circumferential edge 65 configured to surround, in use, the plate 61 of the base 16. From the hub 64, in particular on an axially opposite side with respect to the edge 65, an axial tubular sleeve 66 extends rotatable on the bushing 63 and having the double purpose of resisting the overturning moments and providing an anchorage for an inner end 67 of the spring 42.

The second arm 22 is provided with a substantially cup-shaped hub 71, which is hinged to the bushing 63 and forms with the hub 64 of the first arm 21 an annular cavity housing the spring 42 and radially delimited by a cylindrical wall 72 axially extending cantilevered from the second arm 22 to the first arm 21. The wall 72 defines an anchorage for an outer end 73 of the spring 42.

The stop means 51 further comprise a first radial projection 81 extending from the first arm 21 and a second radial projection 82 extending from the second arm 22.

In particular (Figure 3), considering a plane containing the axis A and a line B bisecting the convex angle θ, such plane divides the space into a first half-space, which contains the half-line S1 but does not contain the half-line S2, and a second half-space, which contains the half-line S2 but does not contain the half-line S1. The first projection 81 extends in the first half-space and the second projection 82 extends in the second half-space. Therefore, when the angular distance between the pulleys 31, 32 decreases under the action of the spring 42, the angular distance between the projections 81, 82 increases, and vice versa.

Conveniently, the first projection 81 radially extends from the hub 64 and the second projection 82 radially extends from the wall 72.

The tensioner 15 further comprises an antifriction ring 91 axially interposed between the first arm 21 on one side and, on the other side, the second arm 22 and the spring 42, so as to reduce as much as possible the relative friction between the first arm 21 and the second arm 22; an axial locking ring 92 fixed to a free end of the pivot 62 via plastic deformation of the latter; a pair of annular elements 93, 94 made of plastic material axially interposed one of the plate 61 of the base 16 and the first arm 21 and the other of the second arm 22 and the locking ring 92 for defining the damping characteristic of the oscillations of the arms 21, 22; a cup-shaped spring 95 arranged between the second arm 22 and the annular element 94 and configured to keep the assembly in axial tension recovering the clearances.

The pulleys 31, 32 are mounted idle, via respective bearings (not illustrated), on respective free ends 96, 97 of the arms 21, 22.

The tensioner 15 is mountable on the support structure 17 via a screw 98 passing through the pivot 62. Preferably, the plate 61 of the base 16 has a tooth (not illustrated) configured to engage a respective seat of the support structure 17 for preventing the rotation of the base 16 about the axis A.

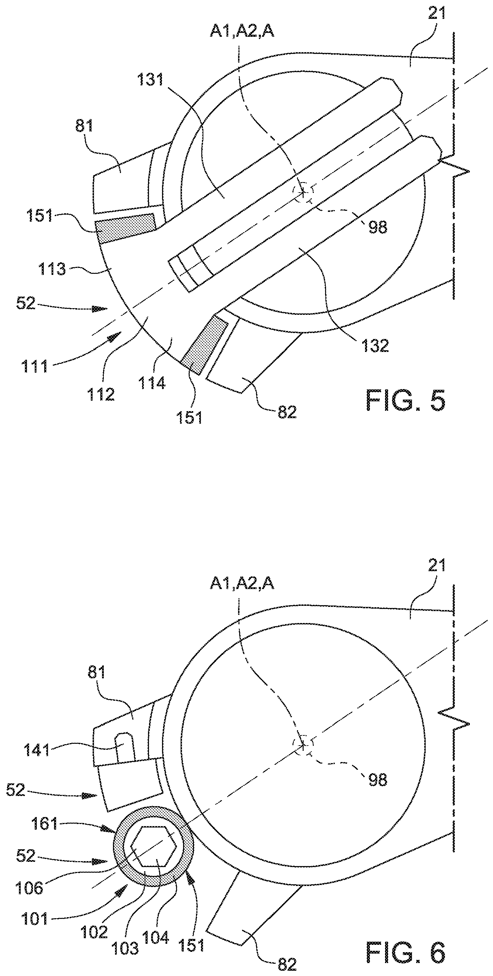

In a first embodiment (Figures 1, 2, 3), in a second embodiment (Figure 4), in a third embodiment (Figure 5) and in a fourth embodiment (Figure 6), the removable stop element 52 is stationary with respect to the base 16 in the operating configuration.

It is specified that, considering a generic first element and a generic second element, stating that the first element is "stationary" with respect to the second element (in a configuration) is equivalent to stating that for each pair of points belonging, respectively, to the first element and to the second element, the distance between such points is constant (in such configuration).

In the first embodiment (Figures 1, 2, 3) and in the fourth embodiment (Figure 6), the removable stop element 52 comprises a pin 101 fixable to the support structure 17.

In particular, the pin 101 comprises a hollow cylindrical element 102 of axis P, parallel to the axis A, fixable to the support structure 17 via detachable connecting means, for example a screw 103 of axis P passing through the cylindrical element 102 and engaging a respective threaded hole of the support structure 17.

Conveniently, the pin 101 comprises an elastic cover 104. In particular, the elastic cover 104 is shaped as a hollow cylinder of axis P and has an end portion 105, opposite a head 106 of the screw 103, in contact with the plate 61 of the base 16.

In the second embodiment (Figure 4) and in the third embodiment (Figure 5), the removable stop element 52 comprises an appendage 111 fixable to the base 16.

In particular, the appendage 111 comprises a stop portion 112 having opposite ends 113, 114 arranged facing respective projections 81, 82.

Conveniently, the stop portion 112 extends along a circumferential arc having centre on the axis A.

In the second embodiment (Figure 4), the appendage 111 comprises a fastening portion 121 extending along a radius joining the stop portion 112 to the axis A.

In particular, the fastening portion 121 has a length less than the radius joining the stop portion 112 to the axis A. In this way, interferences are prevented between the fastening portion 121 and the screw 62. Preferably, the plate 61 of the base 16 has a seat configured to receive the fastening portion 121 and keep it in position, for example via a positive coupling, in the operating configuration.

In the third embodiment (Figure 5), the appendage 111 comprises a pair of fastening portions 131, 132 extending parallel to a radius joining the stop portion 112 to the axis A. The fastening portions 131, 132 extend from opposite sides with respect to the axis A.

In particular, each fastening portion 131, 132 has a length greater than the radius joining the stop portion 112 to the axis A. The distance between the fastening portions 131, 132 is greater than the diameter of the screw 62. In this way, interferences are prevented between the fastening portions 131, 132 and the screw 62. Preferably, the plate 61 of the base 16 has a pair of seats configured to receive the respective fastening portions 131, 132 and keep them in position, for example via a positive coupling, in the operating position.

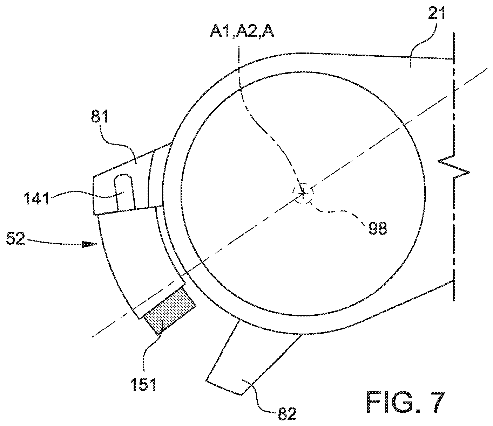

In the fourth embodiment (Figure 6) and in a fifth embodiment (Figure 7), the removable stop element 52 is configured to be constrained to one of the two arms 21, 22.

In particular, the removable stop element 52 is stationary with respect to the arm 21, 22 to which it is constrained.

In the fourth embodiment (Figure 6) and in the fifth embodiment (Figure 7), the removable stop element 52 is configured to be constrained to one of the projections 81, 82.

In particular, the removable stop element 52 is carried by the first projection 81 and extends, along a circumferential arc having centre on the axis A, towards the second projection 82. Conveniently, the removable stop element 52 is fixable to the first projection 81 via detachable connecting means, for example a screw 141 extending orthogonal to the axis A and engaging a respective threaded hole of the first projection 81.

In embodiments (not illustrated) which are dual to the fourth and to the fifth embodiment, respectively, the removable stop element 52 is carried by the second projection 82 and extends, along a circumferential arc having centre on the axis A, towards the first projection 81.

Conveniently, the removable stop element 51 comprises an elastic buffer 151.

In particular, the elastic buffer 151 is stationary with respect to the removable stop element 52.

In the first embodiment (Figures 1, 2, 3) and in the fourth embodiment (Figure 6), the removable stop element 52 comprises the elastic cover 104, which can act as elastic buffer 151, in particular as cylindrical buffer.

In the second embodiment (Figure 4) and in the third embodiment (Figure 5), the removable stop element 52 comprises two elastic buffers 151, carried by the respective ends 113, 114 of the stop portion 112 of the appendage 111.

In the fifth embodiment (Figure 7), the removable stop element 52 comprises the elastic buffer 151 which is stationary with respect to the first arm 21, in particular with respect to the first projection 81, and is arranged facing the second projection 82.

In an embodiment (not illustrated) which is dual to the fifth embodiment, the removable stop element 52 comprises the elastic buffer 151 which is stationary with respect to the second arm 22, in particular with respect to the second projection 82, and is arranged facing the first projection 81.

Conveniently, the tensioner 15 comprises an elastic buffer 161 configured to cooperate with the removable stop element 52.

In the fourth embodiment (Figure 6), the pin 101 of the tensioner 15 comprises the elastic cover 104, which can act as elastic buffer 161, in particular as cylindrical buffer, and is configured to cooperate with the removable stop element 52 constrained to the first arm 21, in particular to the first projection 81.

In further embodiments (not illustrated), the tensioner 15 comprises the elastic buffer 161 constrained to the first arm 21, for example to the first projection 81, and configured to cooperate with the removable stop element 52 stationary with respect to the base 16 or to the second arm 22, and/or the tensioner 15 comprises the elastic buffer 161 constrained to the second arm 22, for example to the second projection 82, and configured to cooperate with the removable stop element 52, stationary with respect to the base 16 or to the first arm 21.

Conveniently, when the removable stop element 52 is absent, the angular distance between the two arms 21, 22 is less than or equal to the first maximum angular distance. For this purpose, it is possible to use respective elements which are stationary with respect to the arms 21, 22 and configured to define the first maximum angular distance when such elements cooperate with one another. For example, such elements can be the projections 81, 82, whose angular arrangement can be such that when the projections 81, 82 are in contact with one another, the angular distance between the two arms 21, 22 is equal to the first maximum angular distance.

The first maximum angular distance between the two arms 21, 22 is such that the corresponding deformation of the spring 42 is less than the yield point.

Conveniently, the removable stop element 52 is dimensioned keeping into account the element or the elements with which it is configured to cooperate in the operating configuration.

In particular, the removable stop element 52 which is stationary with respect to the base 16 in the operating configuration, for example the pin 101 and the appendage 111, is axially dimensioned, for example acting, respectively, on the axial length of the pin 101 and on the axial extension of the stop portion 112 of the appendage 111, keeping into account the axial extension of the arms 21, 22, in particular of the projections 81, 82 to which the removable stop element 52 is circumferentially interposed. The removable stop element 52 configured to be constrained to one of the two arms 21, 22, in particular to one of the projections 81, 82, is axially dimensioned keeping into account the other of the two arms 21, 22, in particular the other of the projections 81, 82.

Conveniently, the removable stop element 52 is dimensioned so that when it cooperates with the element or the elements with which it is configured to cooperate in the operating configuration, the angular distance between the two arms 21, 22 is equal to the second maximum angular distance, which is less than the first maximum angular distance.

In particular, the removable stop element 52 which is stationary with respect to the base 16 in the operating configuration, for example the pin 101 and the appendage 111, is angularly dimensioned, for example acting, respectively, on the diameter of the pin 101 and on the angular extension of the stop portion 112 of the appendage 111, keeping into account the angular distance of the projections 81, 82 to which the removable stop element 52 is circumferentially interposed. The removable stop element 52 configured to be constrained to one of the two arms 21, 22, in particular to one of the projections 81, 82, is angularly dimensioned keeping into account the angular distance of the projections 81, 82.

Conveniently, the first arm 21 and/or the second arm 22 have characteristics configured to define a minimum angular distance between the two arms 21, 22, which is independent of the presence of the belt 14 and of the presence of the removable stop element 52. For example, one of the two arms 21, 22 has, along a portion thereof axially intersecting the convex angle θ, a projection (not illustrated) axially extending towards the other of the two arms 21, 22 and configured to cooperate with it and against the action of the spring 42, defining an angular stop corresponding to the minimum angular distance between the two arms 21, 22.

The minimum angular distance between the two arms 21, 22 is such that the pulleys 31, 32 are not in contact with one another.

The operation of the tensioner 15 is the following.

After the tensioner 15 has been assembled, the arms 21, 22 are loaded towards one another by the spring 42. Conveniently, the angular distance between the two arms 21, 22 is not less than the minimum angular distance, therefore the pulleys 31, 32 are not in contact with one another.

The tensioner 15 is mounted on the support structure 17 via the screw 98. The current configuration is the installation configuration of the belt 14, wherein the removable stop element 52 is absent. Therefore, the two arms 21, 22 can be angularly spaced apart from one another up to the first maximum angular distance. This allows to easily install the belt 14, so that the pulleys 31, 32 are on the outside of the respective spans 14a, 14b, and simultaneously to prevent the yield of the spring 42.

After the belt 14 has been installed, the tensioner 15 is brought, under the action of the spring 42, into a nominal position, defined by the balance between the pull of the belt 14 and the restoring force of the spring 42.

Subsequently, the removable stop element 52 is inserted. For example, the pin 101 is fixed to the support structure 17 via the screw 103, the appendage 111 is fixed to the base 16, or the removable stop element 52 is constrained to one of the two arms 21, 22 via the screw 141. The current configuration is the operating configuration of the accessory drive 1, wherein the removable stop element 52 is present.

In normal operating conditions, the engine 2 supplies drive torque and the electrical machine 7 is driven and operates as alternator. In this condition, the span 14a of the belt 14 is the slack span and the span 14b of the belt 14 is the taut span.

Under the thrust of the spring 42, tending to bring the pulleys 31 and 32 close to one another, the pulley 31 acts on the slack span 14a keeping therein a predetermined minimum tension value as the torque varies.

In boost mode, the electrical machine 7 supplies driving power (positive torque) which adds to that of the engine 2. This tends to reduce the tension in the span 14b and to increase the tension in the span 14a of the belt 14. Conversely, in recovery mode, the electrical machine 7 absorbs mechanical power (negative torque), and thus the tension in the span 14a of the belt 14 tends to decrease.

Since the removable stop element 52 is present, the two arms 21, 22 can be angularly spaced apart from one another not more than the second maximum angular distance, less than the first maximum angular distance. This allows to limit the stroke of the arms 21, 22 and the impact energy of their possible impacts with the removable stop element 52, further absorbed by the elastic buffers 151, 161 which also reduce the noise thereof.

Upon examination of the characteristics of the tensioner 15, the advantages of the present invention are evident.

In particular, the stop means 51 allow improvements both in the installation configuration of the belt 14, wherein the removable stop element 52 is absent, and in the operating configuration of the accessory drive 1, wherein the removable stop element 52 is present. It is possible to define a first maximum angular distance between the two arms 21, 22 and a second maximum angular distance, less than the first maximum angular distance, and switch between them simply via the absence and, respectively, the presence of the removable stop element 52. This allows an easy installation of the belt 14 when the tensioner 15 is not in use and the removable stop element 52 is absent, and a limitation of the stresses and of possible impacts when the tensioner 15 is in use and the removable stop element 52 is present, improving the NVH (Noise, Vibration, Harshness), a measure of the comfort of a vehicle.

As illustrated in the fourth embodiment (Figure 6), the tensioner 15 may comprise two removable stop elements 52. Therefore, it is possible to act only on one, only on the other or on both removable stop elements 52, increasing the possibilities of choice and the consequent results obtainable.

Finally, it is clear that modifications and variations can be made to the tensioner 15 without going beyond the scope of protection defined by the claims.

For example, the internal combustion engine may be replaced by a prime mover of a different nature, for example an electrical motor.

The first axis A1 and the second axis A2 may be distinct from one another. For example, the first axis A1 may be stationary with respect to the base 16 and the second axis A2 may be stationary with respect to the first arm 21. In such a case, the second arm 22, which is rotatable about the second axis A2, is rotatable with respect to, and preferably carried by, the first arm 21.

The first arm 21 and the second arm 22 may be substantially ring-shaped.

The removable stop element 52 may be a radial projection extending from one of the two arms 21, 22.

## Claims

1. Tensioner for an accessory drive of a prime mover (2), the accessory drive (1) comprising at least a first pulley (3) connected to a drive shaft (4) of the prime mover (2), at least a second pulley (5) connected to an electrical machine (7), and a belt (14) wound at least on the first pulley (3) and the second pulley (5), the tensioner (15) comprising:
- a base (16) configured to be fixed to a fixed support structure (17);
- a first arm (21) rotatable with respect to the base (16) about a first axis (A1);
- a second arm (22) rotatable about a second axis (A2);
- a first tensioning pulley (31) carried by the first arm (21) and rotatable with respect to it about its own axis (PA1);
- a second tensioning pulley (32) carried by the second arm (22) and rotatable with respect to it about its own axis (PA2);
- elastic means (41) acting on the first arm (21) and the second arm (22) to push the first tensioning pulley (31) and the second tensioning pulley (32) into contact with respective spans (14a, 14b) of the belt (14); and
- stop means (51) configured to limit an angular distance between the first arm (21) and the second arm (22);
**characterised in that** the stop means (51) comprise at least one removable stop element (52) so as to define a first maximum angular distance between the two arms (21, 22) in an installation configuration of the belt (14) wherein the removable stop element (52) is absent, and a second maximum angular distance, less than the first maximum angular distance, in an operating configuration of the accessory drive (1) wherein the removable stop element (52) is present.

2. Tensioner as claimed in claim 1, wherein the first axis (A1) and the second axis (A2) are coincident and define a common axis (A) of rotation of the two arms (21, 22).

3. Tensioner as claimed in claim 1 or 2, wherein the stop means (51) comprise a first projection (81) radially extending from the first arm (21) and a second projection (82) radially extending from the second arm (22).

4. Tensioner as claimed in any of the preceding claims, wherein the removable stop element (52) is configured to be constrained to one of the two arms (21, 22).

5. Tensioner as claimed in claim 3 or 4, wherein the removable stop element (52) is configured to be constrained to one of the projections (81, 82).

6. Tensioner as claimed in any of claims 1 to 3, wherein the removable stop element (52) is stationary with respect to the base (16) in the operating configuration.

7. Tensioner as claimed in any of the preceding claims, wherein the removable stop element (52) comprises an elastic buffer (151).

8. Tensioner as claimed in any of the preceding claims, comprising an elastic buffer (161) configured to cooperate with the removable stop element (52).

9. Tensioner as claimed in any of claims 6 to 8, wherein the removable stop element (52) comprises a pin (101) fixable to the support structure (17).

10. Tensioner as claimed in claim 9, wherein the pin (101) comprises an elastic cover (104).

11. Tensioner as claimed in any of claims 6 to 8, wherein the removable stop element (52) comprises an appendage (111) fixable to the base (16).

12. Tensioner as claimed in claims 3 and 11, wherein the appendage (111) comprises a stop portion (112) having opposite ends (113, 114) arranged facing the respective projections (81, 82).

13. Tensioner as claimed in claims 2 and 12, wherein the appendage (111) comprises a fastening portion (121) extending along a radius joining the stop portion (112) to the common axis (A).

14. Tensioner as claimed in claim 13, wherein the fastening portion (121) has a length less than the radius joining the stop portion (112) to the common axis (A).

15. Tensioner as claimed in claims 2 and 12, wherein the appendage (111) comprises a pair of fastening portions (131, 132) extending parallel to a radius joining the stop portion (112) to the common axis (A), said fastening portions (131, 132) extending from opposite sides with respect to the common axis (A).

16. Tensioner as claimed in claim 15, wherein each fastening portion (131, 132) has a length greater than the radius joining the stop portion (112) to the common axis (A).

17. Accessory drive for a prime mover (2), comprising at least a first pulley (3) connected to a drive shaft (4) of the prime mover (2), at least a second pulley (5) connected to an electrical machine (7), a belt (14) wound at least on the first pulley (3) and the second pulley (5), and a tensioner (15) as claimed in any of the preceding claims.

## Patentansprüche

1. Spanner für einen Nebenaggregatetrieb einer Antriebsmaschine (2), wobei der Nebenaggregatetrieb (1) mindestens eine erste Riemenscheibe (3), die mit einer Antriebswelle (4) der Antriebsmaschine (2) verbunden ist, mindestens eine zweite Riemenscheibe (5), die mit einer elektrischen Maschine (7) verbunden ist, und einen Riemen (14) umfasst, der mindestens auf der ersten Riemenscheibe (3) und der zweiten Riemenscheibe (5) aufgezogen ist, wobei der Spanner (15) umfasst:
- eine Basis (16), die dazu ausgebildet ist, an einer feststehenden Tragstruktur (17) befestigt zu werden;
- einen ersten Arm (21), der gegenüber der Basis (16) um eine erste Achse (A1) drehbar ist;
- einen zweiten Arm (22), der um eine zweite Achse (A2) drehbar ist;
- eine erste Spannrolle (31), die von dem ersten Arm (21) getragen wird und gegenüber diesem um ihre eigene Achse (PA1) drehbar ist;
- eine zweite Spannrolle (32), die von dem zweiten Arm (22) getragen wird und gegenüber diesem um ihre eigene Achse (PA2) drehbar ist;
- elastische Mittel (41), die auf den ersten Arm (21) und den zweiten Arm (22) wirken, um die erste Spannrolle (31) und die zweite Spannrolle (32) in Kontakt mit jeweiligen Trumen (14a, 14b) des Riemens (14) zu drücken; und
- Anschlagmittel (51), die dazu ausgebildet sind, einen Winkelabstand zwischen dem ersten Arm (21) und dem zweiten Arm (22) zu begrenzen;
**dadurch gekennzeichnet, dass** die Anschlagmittel (51) mindestens ein entfernbares Anschlagelement (52) umfassen, so dass ein erster maximaler Winkelabstand zwischen den beiden Armen (21, 22) in einer Montagekonfiguration des Riemens (14), in der das entfernbare Anschlagelement (52) fehlt, und ein zweiter maximaler Winkelabstand, der kleiner als der erste maximale Winkelabstand ist, in einer Betriebskonfiguration des Nebenaggregatetriebs (1), in der das entfernbare Anschlagelement (52) vorhanden ist, definiert werden.

2. Spanner nach Anspruch 1, wobei die erste Achse (A1) und die zweite Achse (A2) zusammenfallen und eine gemeinsame Drehachse (A) der beiden Arme (21, 22) definieren.

3. Spanner nach Anspruch 1 oder 2, wobei die Anschlagmittel (51) einen ersten Vorsprung (81), der sich radial von dem ersten Arm (21) erstreckt, und einen zweiten Vorsprung (82), der sich radial von dem zweiten Arm (22) erstreckt, umfassen.

4. Spanner nach einem der vorhergehenden Ansprüche, wobei das entfernbare Anschlagelement (52) dazu ausgebildet ist, an einem der beiden Arme (21, 22) festgelegt zu werden.

5. Spanner nach Anspruch 3 oder 4, wobei das entfernbare Anschlagelement (52) dazu ausgebildet ist, an einem der Vorsprünge (81, 82) festgelegt zu werden.

6. Spanner nach einem der Ansprüche 1 bis 3, wobei das entfernbare Anschlagelement (52) in der Betriebskonfiguration gegenüber der Basis (16) unbeweglich ist.

7. Spanner nach einem der vorhergehenden Ansprüche, wobei das entfernbare Anschlagelement (52) einen elastischen Puffer (151) umfasst.

8. Spanner nach einem der vorhergehenden Ansprüche, umfassend einen elastischen Puffer (161), der dazu ausgebildet ist, mit dem entfernbaren Anschlagelement (52) zusammenzuwirken.

9. Spanner nach einem der Ansprüche 6 bis 8, wobei das entfernbare Anschlagelement (52) einen Stift (101) umfasst, der an der Tragstruktur (17) befestigbar ist.

10. Spanner nach Anspruch 9, wobei der Stift (101) eine elastische Abdeckung (104) umfasst.

11. Spanner nach einem der Ansprüche 6 bis 8, wobei das entfernbare Anschlagelement (52) einen Fortsatz (111) umfasst, der an der Basis (16) befestigbar ist.

12. Spanner nach den Ansprüchen 3 und 11, wobei der Fortsatz (111) einen Anschlagabschnitt (112) mit gegenüberliegenden Enden (113, 114) umfasst, die den jeweiligen Vorsprüngen (81, 82) zugewandt angeordnet sind.

13. Spanner nach den Ansprüchen 2 und 12, wobei der Fortsatz (111) einen Befestigungsabschnitt (121) umfasst, der sich entlang eines Radius erstreckt, der den Anschlagabschnitt (112) mit der gemeinsamen Achse (A) verbindet.

14. Spanner nach Anspruch 13, wobei der Befestigungsabschnitt (121) eine Länge aufweist, die kleiner ist als der Radius, der den Anschlagabschnitt (112) mit der gemeinsamen Achse (A) verbindet.

15. Spanner nach den Ansprüchen 2 und 12, wobei der Fortsatz (111) ein Paar von Befestigungsabschnitten (131, 132) umfasst, die sich parallel zu einem Radius erstrecken, der den Anschlagabschnitt (112) mit der gemeinsamen Achse (A) verbindet, wobei sich die Befestigungsabschnitte (131, 132) von einander gegenüberliegenden Seiten bezüglich der gemeinsamen Achse (A) erstrecken.

16. Spanner nach Anspruch 15, wobei jeder Befestigungsabschnitt (131, 132) eine Länge aufweist, die größer ist als der Radius, der den Anschlagabschnitt (112) mit der gemeinsamen Achse (A) verbindet.

17. Nebenaggregatetrieb für eine Antriebsmaschine (2), umfassend mindestens eine erste Riemenscheibe (3), die mit einer Antriebswelle (4) der Antriebsmaschine (2) verbunden ist, mindestens eine zweite Riemenscheibe (5), die mit einer elektrischen Maschine (7) verbunden ist, einen Riemen (14), der mindestens auf der ersten Riemenscheibe (3) und der zweiten Riemenscheibe (5) aufgezogen ist, und einen Spanner (15) nach einem der vorhergehenden Ansprüche.

## Revendications

1. Tendeur pour une transmission d'accessoire d'un moteur principal (2), la transmission d'accessoire (1) comprenant au moins une première poulie (3) raccordée à un arbre de transmission (4) du moteur principal (2), au moins une deuxième poulie (5) raccordée à une machine électrique (7) et une courroie (14) enroulée au moins sur la première poulie (3) et la deuxième poulie (5), le tendeur (15) comprenant :
une base (16) configurée pour être fixée sur une structure de support fixe (17) ;
un premier bras (21) pouvant tourner par rapport à la base (16) autour d'un premier axe (A1) ;
un deuxième bras (22) pouvant tourner autour d'un deuxième axe (A2) ;
une première poulie de tension (31) portée par le premier bras (21) et pouvant tourner par rapport à ce dernier autour de son propre axe (PA1) ;
une deuxième poulie de tension (32) portée par le deuxième bras (22) et pouvant tourner par rapport à ce dernier autour de son propre axe (PA2) ;
des moyens élastiques (41) agissant sur le premier bras (21) et le deuxième bras (22) afin de pousser la première poulie de tension (31) et la deuxième poulie de tension (32) en contact avec les brins (14a, 14b) respectifs de la courroie (14) ; et
des moyens d'arrêt (51) configurés pour limiter une distance angulaire entre le premier bras (21) et le deuxième bras (22) ;
**caractérisé en ce que** les moyens d'arrêt (51) comprennent au moins un élément d'arrêt amovible (52) afin de définir une première distance angulaire maximum entre les deux bras (21, 22) dans une configuration d'installation de la courroie (14), dans lequel l'élément d'arrêt amovible (52) est absent, et une deuxième distance angulaire maximum, inférieure à la première distance angulaire maximum, dans une configuration opérationnelle de la transmission d'accessoire (1), dans lequel l'élément d'arrêt amovible (52) est présent.

2. Tendeur selon la revendication 1, dans lequel le premier axe (A1) et le deuxième axe (A2) coïncident et définissent un axe commun (A) de rotation des deux bras (21, 22).

3. Tendeur selon la revendication 1 ou 2, dans lequel les moyens d'arrêt (51) comprennent une première saillie (81) s'étendant radialement à partir du premier bras (21) et une deuxième saillie (82) s'étendant radialement à partir du deuxième bras (22).

4. Tendeur selon l'une quelconque des revendications précédentes, dans lequel l'élément d'arrêt amovible (52) est configuré pour être fixé à l'un des deux bras (21, 22).

5. Tendeur selon la revendication 3 ou 4, dans lequel l'élément d'arrêt amovible (52) est configuré pour être fixé à l'une des saillies (81, 82).

6. Tendeur selon l'une quelconque des revendications 1 à 3, dans lequel l'élément d'arrêt amovible (52) est fixe par rapport à la base (16) dans la configuration opérationnelle.

7. Tendeur selon l'une quelconque des revendications précédentes, dans lequel l'élément d'arrêt amovible (52) comprend un tampon élastique (151).

8. Tendeur selon l'une quelconque des revendications précédentes, comprenant un tampon élastique (161) configuré pour coopérer avec l'élément d'arrêt amovible (52).

9. Tendeur selon l'une quelconque des revendications 6 à 8, dans lequel l'élément d'arrêt amovible (52) comprend une broche (101) pouvant être fixée sur la structure de support (17).

10. Tendeur selon la revendication 9, dans lequel la broche (101) comprend un couvercle élastique (104).

11. Tendeur selon l'une quelconque des revendications 6 à 8, dans lequel l'élément d'arrêt amovible (52) comprend un appendice (111) pouvant être fixé sur la base (16).

12. Tendeur selon les revendications 3 et 11, dans lequel l'appendice (111) comprend une partie d'arrêt (112) ayant des extrémités opposées (113, 114) agencées en face des saillies (81, 82) respectives.

13. Tendeur selon les revendications 2 et 12, dans lequel l'appendice (111) comprend une partie de fixation (121) s'étendant le long d'un rayon assemblant la partie d'arrêt (112) à l'axe commun (A).

14. Tendeur selon la revendication 13, dans lequel la partie de fixation (121) a une longueur inférieure au rayon assemblant la partie d'arrêt (112) à l'axe commun (A).

15. Tendeur selon les revendications 2 et 12, dans lequel l'appendice (111) comprend une paire de parties de fixation (131, 132) s'étendant parallèlement à un rayon assemblant la partie d'arrêt (112) à l'axe commun (A), lesdites parties de fixation (131, 132) s'étendant à partir des côtés opposés par rapport à l'axe commun (A).

16. Tendeur selon la revendication 15, dans lequel chaque partie de fixation (131, 132) a une longueur supérieure au rayon assemblant la partie d'arrêt (112) à l'axe commun (A).

17. Transmission d'accessoire pour un moteur principal (2), comprenant au moins une première poulie (3) raccordée à un arbre de transmission (4) du moteur principal (2), au moins une deuxième poulie (5) raccordée à une machine électrique (7), une courroie (14) enroulée au moins sur la première poulie (3) et la deuxième poulie (5), et un tendeur (15) selon l'une quelconque des revendications précédentes.
